# EUROPÄISCHE PATENTSCHRIFT

(11) **EP 0 878 625 B1**
(45) Veröffentlichungstag und Bekanntmachung des Hinweises auf die Patenterteilung: **10.12.2003**
(21) Anmeldenummer: 98114610.3
(22) Anmeldetag: 04.08.1998
(51) Int. Cl.: F04C 15/00, F04C 2/14

(54) **Verfahren und Vorrichtung zum Abdichten einer Welle sowie Anwendung des Verfahrens und Verwendung der Vorrichtung bei einer Zahnradpumpe**
Method and device for sealing a shaft and use of the method and the device in a gear pump
Procédé et dispositif pour rendre étanche un arbre ainsi que l'utilisation de ce procédé et de ce dispositif dans une pompe à engrenages

(43) Veröffentlichungstag der Anmeldung: 18.11.1998
(73) Patentinhaber: Maag Pump Systems Textron AG, 8023 Zürich (CH)
(72) Erfinder: Blume, Peter, 8057 Zürich (CH); Niedermann, Eugen, 5430 Wettingen (CH)
(74) Vertreter: Troesch Scheidegger Werner AG

(56) Entgegenhaltungen:
- DE-A- 4 125 128
- US-A- 4 336 213

## Beschreibung

Die vorliegende Erfindung betrifft ein Verfahren nach dem Oberbegriff des Patentanspruchs 1 sowie eine Anwendung des Verfahrens, eine Vorrichtung zur Durchführung des Verfahrens und eine Verwendung der Vorrichtung bei einer Zahnradpumpe.

Gewinde-Wellendichtungen sind berührungsfreie Dichtungen, bei denen aufgrund des hydrodynamischen Staurandeffektes im Dichtspalt rotierender Wellen selbsttätig ein Druck aufgebaut wird, der dem abzudichtenden Druck das Gleichgewicht hält. Da praktisch kein Verschleiss auftritt, ist die Lebensdauer solcher Dichtungen sehr lang.

Eine solche Gewinde-Wellendichtung ist in der US-4 336 213 (Fox) beschrieben, wobei eine Zahnradpumpe mit einer aus dem Pumpengehäuse herausgeführten Antriebsachse offenbart ist, die mittels einer Gewinde-Wellendichtung abgedichtet ist. Die Dichtung besteht aus einer die Welle umgreifenden Muffe, in die ein schraubenförmiger Kanal eingeformt ist. Die Orientierung des schraubenförmigen Kanals ist dabei derart gewählt, dass beim Drehen der Antriebswelle Fördermedium, das aufgrund von Druckunterschieden zwischen Welle und Gleitlager nach Aussen gepresst wird, durch den schraubenförmigen Kanal ins Pumpengehäuse zurück gepumpt wird.

Die Dichtwirkung bei dieser bekannten Lehre wird durch die Viskosität des abzudichtenden Mediums, die Gewindegeometrie, das Radialspiel zwischen Antriebswelle und Stegkopfdurchmesser und die Drehzahl der Antriebswelle beeinflusst. Insbesondere die Drehzahl der Antriebswelle ist eine durch andere Betriebserfordernisse festgelegte Grösse und kann in der Regel nicht für eine Abdichtoptimierung variiert werden.

Der vorliegenden Erfindung liegt daher die Aufgabe zugrunde, ein Verfahren und eine Vorrichtung zum Abdichten von Wellen anzugeben, bei denen die vorstehend genannten Nachteile nicht auftreten.

Diese Aufgabe wird durch die im kennzeichnenden Teil des Patentanspruchs 1 angegebenen Massnahmen gelöst. Vorteilhafte Ausgestaltungen der Erfindung sowie eine Anwendung des Verfahrens, eine Vorrichtung zur Durchführung des Verfahrens und eine Verwendung der Vorrichtung sind in weiteren Ansprüchen angegeben.

Die Erfindung weist folgende Vorteile auf: Indem eine Dichtungshülse zum Einsatz kommt, die unabhängig von der Welle rotiert werden kann, wird der Grad der Abdichtung erfindungsgemäss unabhängig von der Wellendrehzahl einstellbar. Insbesondere wird auch eine Abdichtung dann erreicht, wenn die Welle im Stillstand ist. Massgebend für eine Dichtwirkung ist lediglich der relative Drehzahlunterschied zwischen der Welle und der Dichtungshülse.

Da nur die Relativdrehzahl für die Dichtwirkung und die Förderrichtung massgebend sind, genügt eine einzige Ausführungsform für die schraubenförmigen Kanäle für alle Anwendungsfälle, die von Abdichtung über definierte geringe Leckage bis hin zu aktivem Herausfördern reichen.

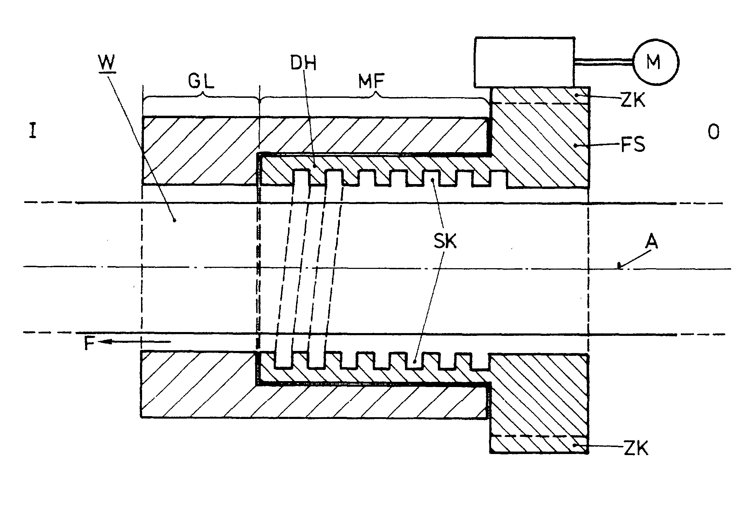

Die Erfindung wird nachfolgend anhand einer Zeichnung beispielsweise näher erläutert. Dabei zeigt die einzige Figur eine erfindungsgemässe Wellendurchführung.

In der Figur ist schematisch eine erfindungsgemässe Wellendurchführung einer Welle W mit Mittelachse A dargestellt, wie sie zum Beispiel bei Fördermedium-geschmierten Zahnradpumpen zum Einsatz kommt, wobei mit I die Innenseite eines die ineinandergreifenden Zahnräder enthaltenden Pumpengehäuses und mit O dessen Aussenseite bezeichnet sind. Die Zahnräder der Zahnradpumpe sind dementsprechend auf der Innenseite I der Welle W angeordnet.

Zahnradseitig ist bei einer Zahnradpumpe ein Gleitlager GL vorgesehen, das mit einem Schmiermittel oder aber mit dem Fördermedium F direkt geschmiert wird. Aufgrund der Druckund Kräfteverhältnisse und der notwendigen Spiele im Gleitlager GL wird das Schmiermittel in Richtung Aussenseite O gepresst. Zur Vermeidung von Schmiermittelverlusten ist erfindungsgemäss ein schraubenförmiger Kanal SK in einer Dichtungshülse DH vorgesehen, die drehbar in einer diese umgebenden Muffe MF gelagert ist. In der Figur bildet das Gleitlager GL und die Muffe MF einen zusammenhängenden Körper. Denkbar ist aber auch, dass Gleitlager GL und Muffe MF je für sich einen Körper bilden.

Die Muffe MF weist gegenüber den radialen Abmessungen des Gleitlagers GL eine Ausnehmung auf, die den radialen Abmessungen der Dichtungshülse DH bis auf ein vorzusehendes Spiel zur Ermöglichung einer Rotation der Dichtungshülse DH in der Muffe MF entspricht.

Mit der erfindungsmässen Vorrichtung kann die Abdichtung der Welle W optimal durch die Wahl des relativen Drehzahlunterschiedes zwischen den Drehzahlen der Welle W und der Dichtungshülse DH eingestellt werden, ohne dass auf Kompromisse - zum Beispiel in bezug auf die Abdichtung oder in bezug auf die Förderleistung der Zahnradpumpe - eingegangen werden muss. Zudem können grössere Unterschiede der ebenfalls die Dichtwirkung mitbestimmenden Viskosität bei der Einstellung der Drehzahl der Dichtungshülse DH berücksichtigt werden.

Dichtungsseitig, mit der Dichtungshülse DH vorzugsweise einen Körper bildend oder mit dieser zumindest starr verbunden, ist ein Fortsatz FS vorgesehen, auf den eine Antriebseinheit M beispielsweise über einen Zahnkranz ZK, einen Zahnriemen oder einen Keilriemen wirkt. Die Drehzahl der Antriebseinheit M wird dabei aufgrund der gemessenen Drehzahl der Welle W und dem gewünschten Dichtungsgrad eingestellt.

Eine weitere Ausführungsform der erfindungsgemässen Vorrichtung besteht darin, dass der schraubenförmige Kanal nicht wie in der Figur dargestellt in die Dichtungshülse DH sondern vielmehr in die Welle W eingeformt ist. Die Dichtungshülse weist dann vorzugsweise eine rauhe Oberflächenbeschaffenheit auf oder aber ist ihrerseits auch mit einem schraubenförmigen Kanal oder mit konzentrischen Kanälen ausgebildet.

Darüber hinaus und in Weiterführung der eben erwähnten Ausführungsvariante der Erfindung wird darauf hingewiesen, dass - analog zur Ausnehmung in der Muffe MF - in einer weiteren Ausführungsvariante der Erfindung die Welle W eine Ausnehmung zur Aufnahme einer auf der Welle W drehbar gelagerten Dichtungshülse aufweist. Die Antriebseinheit M als auch die Art des Antriebs der Dichtungshülse sind diesfalls entsprechend anzupassen.

Es wird nochmals darauf hingewiesen, dass die erfindungsgemässe Dichtung auch bei Stillstand der Welle W die volle Wirkung entfalten kann. Eine Zusatzdichtung für den Stillstand der Zahnradpumpe, wie dies beispielsweise gemäss der DE-4 125 128 vorgesehen wurde, ist nicht erforderlich.

Darüber hinaus eignet sich die erfindungsgemässe Vorrichtung nicht nur für das sogenannte Rückfördern von Schmiermittel in Richtung Innenseite des Zahnradgehäuses. Anwendungen, bei denen Schmiermittel nach dem Durchtritt durch das Gleitlager GL abgeführt werden sollen oder müssen, können mit der erfindungsgemässen Vorrichtung ebenfalls vorzüglich realisiert werden. Dabei besteht zusätzlich die Möglichkeit, die Fördergeschwindigkeit von Schmiermittel in Richtung Aussenseite O zu erhöhen, indem die Drehzahl der Dichtungshülse DH grösser gewählt wird als die Drehzahl der Welle W.

Es wird nochmals ausdrücklich darauf hingewiesen, dass die erfindungsgemässe Vorrichtung nicht allein auf Anwendungen bei Zahnradpumpen eingeschränkt ist. Vielmehr lässt sich die Erfindung für alle Abdichtungen von in einem flüssigen Medium drehbar gelagerten Wellen in vorteilhafter Weise anwenden.

## Patentansprüche

1. Verfahren zum Abdichten einer in einem flüssigen Medium (F) gelagerten drehbaren Welle (W) mit Hilfe eines schraubenförmigen Kanals (SK), der zwischen der Welle (W) und einer Muffe (MF) wirkt, **dadurch gekennzeichnet, dass** der schraubenförmige Kanal (SK) im Bereich einer in die Muffe (MF) aufgenommenen Dichtungshülse (DH) vorgesehen ist, deren Drehzahl unabhängig von der Drehzahl der Welle (W) eingestellt wird.

2. Anwendung des Verfahrens nach Anspruch 1 bei Fördermedium-geschmierten Zahnradpumpen.

3. Vorrichtung zur Durchführung des Verfahrens nach Anspruch 1 mit einer Welle (W), die in einem flüssigen Medium (F) drehbar gelagert ist und die in einem Dichtungsabschnitt mit Hilfe eines schraubenförmigen Kanals (SK) abgedichtet ist, **dadurch gekennzeichnet, dass** im Dichtungsabschnitt, ausgehend von der Welle (W) in radialer Richtung nach aussen, eine Dichtungshülse (DH) und eine Muffe (MF) vorgesehen sind, wobei die Dichtungshülse (DH) in der Muffe (MF) drehbar gelagert ist.

4. Vorrichtung nach Anspruch 3, **dadurch gekennzeichnet, dass** mindestens ein schraubenförmiger Kanal (SK) in die Welle (W) im Bereich der Dichtungshülse (DH) eingelassen ist.

5. Vorrichtung nach Anspruch 3, **dadurch gekennzeichnet, dass** mindestens ein schraubenförmiger Kanal (SK) in die Dichtungshülse (DH) eingelassen ist.

6. Vorrichtung nach einem der Ansprüche 3 bis 5, **dadurch gekennzeichnet, dass** zwei entgegengesetzt orientierte schraubenförmige Kanäle (SK) vorgesehen sind.

7. Vorrichtung nach einem der Ansprüche 3 bis 6, **dadurch gekennzeichnet, dass** die Muffe (MF) eine Ausnehmung zur Aufnahme der Dichtungshülse (DH) aufweist.

8. Vorrichtung nach einem der Ansprüche 3 bis 6, **dadurch gekennzeichnet, dass** die Welle (W) eine Ausnehmung zur Aufnahme der Dichtungshülse aufweist.

9. Vorrichtung nach einem der Ansprüche 3 bis 8, **dadurch gekennzeichnet, dass** eine Antriebseinheit (M) auf die Dichtungshülse (DH) wirkt.

10. Vorrichtung nach einem der Ansprüche 3 bis 9, **dadurch gekennzeichnet, dass** die Dichtungshülse (DH) einen Fortsatz (FS) aufweist, auf den ein mit der Antriebseinheit (M) verbundener Zahnkranz, Zahnriemen oder Keilriemen wirkt.

11. Verwendung der Vorrichtung nach einem der Ansprüche 3 bis 10 bei einer Fördermedium-geschmierten Zahnradpumpe zum Abdichten einer aus dem Pumpengehäuse herausgeführten Welle (W).

## Claims

1. Method to seal a rotatable shaft (W) supported by a liquid medium (F) with the aid of a helical channel (SK) that acts between the shaft (W) and a coupling sleeve (MF), **characterized in that** the helical channel (SK) is provided in an area of a sealing sleeve (DH) received by the coupling sleeve (MF), which sealing sleeve (DH) has a rotational speed which can be adjusted independently of the rotational speed of the shaft (W).

2. Use of the method according to claim 1 for a medium-lubricated gear pump.

3. Device for operating the method according to claim 1 with a shaft (W) which is rotatably supported in a fluid medium (F) and which is sealed with a helical channel (SK) in a sealing section, **characterized in that** a sealing sleeve (DH) and a coupling sleeve (MF) are provided in the sealing section, starting from the shaft (W) in radial direction towards the outside, the sealing sleeve (DH) being rotatably supported by the coupling sleeve (MF).

4. Device according to claim 3, **characterized in that** at least one helical channel (SK) is set into the shaft (W) in the area of the sealing sleeve (DH).

5. Device according to claim 3, **characterized in that** at least one helical channel (SK) is set into the sealing sleeve (DH).

6. Device according to one of the claims 3 to 5, **characterized in that** two opposite oriented helical channels (SK) are provided.

7. Device according to one of the claims 3 to 6, **characterized in that** the coupling sleeve (MF) has a recess to receive the sealing sleeve (DH).

8. Device according to one of the claims 3 to 6, **characterized in that** the shaft (W) has a recess to receive the sealing sleeve.

9. Device according to one of the claims 3 to 8, **characterized in that** a driving unit (M) acts on the sealing sleeve (DH).

10. Device according to one of the claims 3 to 9, **characterized in that** the sealing sleeve (DH) has a further element (FS) on which a ring gear, a notched belt or a V-belt connected to the driving unit (M) takes effect.

11. Use of the device according to one of the claims 3 to 10 for a medium-lubricated gear wheel to seal a shaft (W) leading out of a pump housing.

## Revendications

1. Procédé pour rendre étanche un arbre rotatif (W) supporté dans un milieu liquide (F) à l'aide d'un canal en hélice (SK) agissant entre l'arbre (W) et un manchon (MF), **caractérisé en ce que** ledit canal en hélice (SK) est prévu dans une zone d'une douille d'étanchéité (DH) reçue dans ledit manchon (MF), ladite douille (DH) ayant une vitesse de rotation qui est ajustée indépendant de la vitesse de rotation de l'arbre (W).

2. Utilisation du procédé selon la revendication 1 dans des pompes à engrenages lubrifiées par le milieu refoulé.

3. Dispositif pour la mise en oeuvre du procédé selon la revendication 1, avec un arbre supporté de manière rotative dans un milieu liquide (F) et rendu étanche dans une zone d'étanchéité à l'aide d'un canal en hélice (SK), **caractérisé par** une douille d'étanchéité (DH) et un manchon (MF) prévus dans la zone d'étanchéité partant de l'arbre (W) en direction radiale vers l'extérieur, ladite douille d'étanchéité (DH) étant supportée de manière rotative dans ledit manchon (MF).

4. Dispositif selon la revendication 3, **caractérisé en ce qu'**au moins un canal en hélice (SK) est travaillé dans l'arbre (W) dans la zone de la douille d'étanchéité (DH).

5. Dispositif selon la revendication 3, **caractérisé en ce qu'**au moins un canal en hélice (SK) est travaillé dans la douille d'étanchéité (DH).

6. Dispositif selon l'une des revendications 3 à 5, **caractérisé en ce que** deux canaux en hélice (SK) de directions opposées sont prévus.

7. Dispositif selon l'une des revendications 3 à 6, **caractérisé en ce que** le manchon (MF) présente un évidement pour recevoir la douille d'étanchéité (DH).

8. Dispositif selon l'une des revendications 3 à 6, **caractérisé en ce que** l'arbre (W) présente un évidement pour recevoir la douille d'étanchéité.

9. Dispositif selon l'une des revendications 3 à 8, **caractérisé par** une unité d'entraînement (M) agissant sur la douille d'étanchéité (DH).

10. Dispositif selon l'une des revendications 3 à 9, **caractérisé en ce que** la douille d'étanchéité (DH) présente une prolongation (FS) sur laquelle agit une couronne dentée, une courroie dentée ou une courroie trapézoïdale en connection avec ladite unité d'entraînement (M).

11. Utilisation du dispositif selon l'une des revendications 3 à 10 dans une pompe à engrenages lubrifiée par le milieu refoulé pour rendre étanche un arbre (W) sortant du boîtier de la pompe.
